# EUROPÄISCHE PATENTSCHRIFT

(11) **EP 2 204 014 B1**
(45) Veröffentlichungstag und Bekanntmachung des Hinweises auf die Patenterteilung: **29.10.2014**
(21) Anmeldenummer: 08803670.2
(22) Anmeldetag: 04.09.2008
(51) Int. Cl.: H04L 12/40

(54) **Kommunikationsverfahren und Master-Slave-System für einen nach dem AS-Interface Standard ausgeführten Feldbus**
Communication method and master-slave system for a field bus configured according to the AS-interface standard
Procédé de communication et système maître-esclave pour un bus de champ de conception conforme à la norme d'interface actionneur-capteur

(30) Priorität: 28.09.2007 DE 102007046440
(43) Veröffentlichungstag der Anmeldung: 07.07.2010
(73) Patentinhaber: Siemens Aktiengesellschaft, 80333 München (DE)
(72) Erfinder: WIESGICKL, Bernhard, 92249 Vilseck (DE)
(86) Internationale Anmeldenummer: PCT/EP2008/061700
(87) Internationale Veröffentlichungsnummer: WO 2009/043675

(56) Entgegenhaltungen:
- DE-A1- 4 339 046
- DE-A1- 10 240 669
- DE-A1- 10 328 707

## Beschreibung

Die Erfindung betrifft ein Kommunikationsverfahren für einen nach dem AS-Interface Standard ausgeführten Feldbus gemäß dem Oberbegriff des Anspruch 1. Ferner betrifft die Erfindung ein Master-Slave-System für einen solchen Feldbus gemäß dem Oberbegriff des Anspruchs 7, sowie eine dazugehörige Steuerungs-, Aktor- oder Sensoreinheit.

Ein Feldbus ist ein industrielles Kommunikationssystem auf der untersten Steuerungsebene eines Automatisierungssystems, das eine Vielzahl von Feldgeräten wie Messfühler (Sensoren), Stellglieder und Antriebe (Aktoren) mit einem Steuerungsgerät verbindet.

AS-Interface (AS-I = Aktor-Sensor-Interface) ist ein möglicher Kommunikationsstandard zur Kommunikation zwischen dem Steuerungsgerät (Master) und den Feldgeräten (Slaves) über einen solchen Feldbus.

Bei einem nach den AS-Interface Spezifikationen ausgebildeten Feldbus hat der Master als einziger das Recht, unaufgefordert auf den Feldbus zuzugreifen. Der Master fragt dabei zyklisch alle Slaves ab und tauscht mit ihnen die Ein- und Ausgangsdaten über ein serielles Übertragungsprotokoll aus. Die Slaves dürfen und können von sich aus nicht auf den Feldbus zugreifen und müssen warten, bis sie vom Master gefragt werden. Jedem der Slaves ist dazu eine eindeutige Adresse zugewiesen. In einem AS-Interface können nach derzeitiger Spezifikation (Vers. 2.11) so maximal 62 Teilnehmer an einen Master angeschlossen werden.

Als Übertragungsmedium für den Feldbus wird eine bevorzugt als Flachbandkabel ausgeführte, ungeschirmte zweiadrige Leitung verwendet, die gleichzeitig auch als Stromversorgung für Slaves dienen kann. Das Übertragungsprotokoll wird dazu auf die Spannungsversorgung aufmoduliert. Es kommen dabei die Manchester-Codierung und eine Alternierende Puls Modulation Codierung (APM-Codierung) zum Einsatz. So können Bit-Zeiten von 6µs verwirklicht werden.

Je Slave benötigt der Master etwa 150 µs zum Abfragen. Eine längere Zeitspanne ist derzeit bei AS-Interface nicht vorgesehen, da ansonsten der Zyklus zwischen zwei Abfragen, in denen der Master immer alle 62 Slaves nacheinander abfragt, zu lange dauern würde. Ein Telegramm, über das ein Slave nach dem er angesprochen wurde mit dem Master kommuniziert, besteht dabei aus 4-Bit Nutzdaten. Hieraus ergeben sich bei der Kommunikation zwischen Master und Slave extrem kurze Masteraufruf- und Slaveantwort- Zeiten im µs-Bereich.

AS-Interface erfüllt die Störfestigkeitsanforderungen für die Kommunikation in industriellen Anlagen unter anderem dadurch, dass gemäß der AS-Interface Spezifikationen die Telegramme bis zu 6 mal wiederholt werden können, bevor es zu einer Fehlermeldung bzw. einem Stillstand der Anlage kommt.

Um die Verfügbarkeit der Anlage auch bei starken Störpegeln zu erhöhen, könnte parallel zu dem Feldbus ein zweiter Kommunikationskanal aufgebaut werden über den nochmals die gleichen Telegramme wie über den Feldbus gesendet werden. Bei einer solchen redundanten Kommunikation genügt es dann, wenn der jeweils angesprochene Teilnehmer zumindest eines der beiden Telegramme erhält. Solche redundante Systeme erhöhen durch die geringere Ausfallwahrscheinlichkeit dann zwar die Anlagenverfügbarkeit. Sie haben aber den Nachteil, dass an diesen zweiten Kommunikationskanal die gleichen Anforderungen an zu übertragene Datenmenge und Übertragungsgeschwindigkeit gestellt werden müssen, wie an den AS-Interface Feldbus selbst. Dies macht eine solche Lösung aufwändig und damit teuer.

Die DE 103 28 707 A1 offenbart einen Fail-Silent-Datenbus mit zwischen jeweils zwei oder mehreren Busknoten ablaufender Datenkommunikation auf zwei parallelen Datenleitungen. Der Datenbus weist in jedem Busknoten einen Bustreiber für jede Datenleitung auf.

Aufgabe der Erfindung ist es, ein Kommunikationsverfahren und ein Master-Slave-System, sowie entsprechende Einrichtungen für einen nach dem AS-Interface Standard ausgeführten Feldbus zur Verfügung zu stellen, die die Ausfallwahrscheinlichkeit einer so projektierten Anlage verringern.

Diese Aufgabe wird mit dem Kommunikationsverfahren mit den Merkmalen des Anspruchs 1 sowie dem Master-Slave-System mit den Merkmalen des Anspruchs 7 gelöst.

Erfindungsgemäß ist dazu vorgesehen, dass ein nach dem AS-Interface Standard ausgeführter Feldbus als ein erster Kommunikationskanal dient, über den ein am Feldbus angebundener Master in einem Zyklus seriell mit einer Anzahl am Feldbus angebundener Slaves kommuniziert, wobei in einem Zyklus die Kommunikation des Masters mit den Slaves nacheinander über Telegramme, die jeweils eindeutig einem Slave zugeordnet sind, erfolgt und ein Telegramm auf dem ersten Kommunikationskanal und auf einem zweiten Kommunikationskanal zwischen Master und Slave wiederholt wird, wenn die Kommunikation dieses Telegramms über den ersten Kommunikationskanal fehlgeschlagen ist.

Somit erfolgt im Fehlerfall eine Wiederholung des fehlerhaften Telegramms nicht nur über diesen ersten Kommunikationskanal, sondern redundant über zwei voneinander getrennte Kommunikationskanäle. Durch diese redundante Kommunikation steigt dann die Wahrscheinlichkeit, dass das Telegramm trotz Störung auf dem ersten Kommunikation erfolgreich zwischen Master und Slave ausgetauscht wird.

Dadurch, dass aber nur dann eine Kommunikation über den zweiten Kanal notwendig ist, wenn der Fehlerfall eintritt, das heißt ein Telegramm nicht übertragen wurde, sind an das Übertragungsmedium dieses zweiten Kommunikationskanals geringere Anforderungen bezüglich Übertragungsqualität (z.B. Datenrate oder Timing) zu stellen. Somit muss dieses Übertragungsmedium, bzw. diese Kommunikationsverbindung, nicht wie der Feldbus die AS-Interface Spezifikationen erfüllen, sondern kann kostengünstiger verdrahtet werden. Die Erfindung erlaubt damit mit geringem Aufwand die Störfestigkeit der Kommunikation zwischen Master und Slaves zu verbessern. Somit kann die Ausfallwahrscheinlichkeit der Anlage verringert und damit die Verfügbarkeit der projektierten Anlage erhöht werden.

Wird die, meist im voraus, festgelegte Zeitdauer der Telegramme für die Kommunikation des Masters mit den Slaves auf dem zweiten Kommunikationskanal größer ausgelegt als die Zeitdauer des ersten Kommunikationskanal, sind die Timinganforderungen an diesen zweiten Kommunikationskanal weniger hoch als die an den ersten Kommunikationskanal.

Erfindungsgemäß können somit die Steuerungseinheiten als Master und Aktoren oder Sensoren als Slaves eines Master-Slaves Systems auch zusätzlich mittels drahtloser Kommunikationsverbindungen, wie zum Beispiel W-LAN oder Bluetooth usw., als zweiten Kommunikationskanal miteinander verbunden werden.

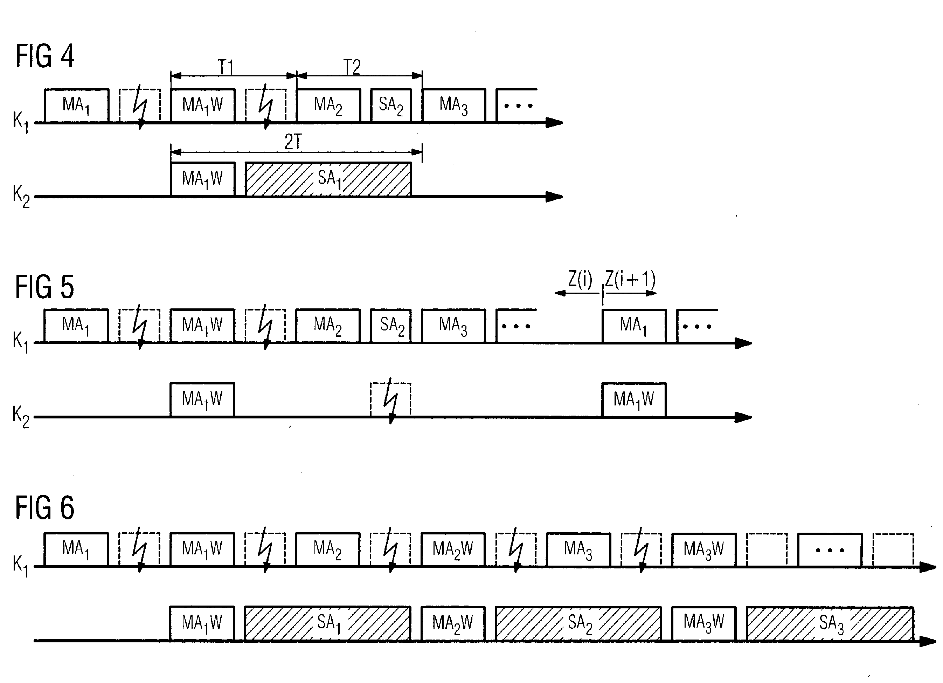

Wird nur die Wiederholung eines fehlgeschlagenen Telegramms über den zweiten Kommunikationskanal übertragen und im Falle eines weiteren Fehlschlagens mit dem nächsten Telegramm für den nächsten Slave fortgefahren, ist die Zeitdauer der Telegramme auf dem zweiten Kommunikationskanal maximal doppelt lang wie die Zeitdauer der Telegramme auf dem ersten Kommunikationskanal. Dadurch lassen sich auch Mehrfachfehler, das heißt Fehler in aufeinander folgenden Telegrammen, korrigieren (FIG 6), was die Ausfallwahrscheinlichkeit der Anlage weiter verringert.

Gemäß einer vorteilhaften Ausgestaltung der Erfindung wird bei der Wiederholung eines der Telegramme der Masteraufruf parallel und somit zumindest zum gleichen Zeitpunkt über den ersten und zweiten Kommunikationskanal gestartet. Damit ist die für eine Slaveantwort auf dem zweiten Kommunikationskanal zur Verfügung stehende Zeitspanne maximiert.

Erfindungsgemäß ergeben sich so eine Reihe von Merkmalen, die Einzeln oder in Kombination auf einfache Art und Weise und damit kostengünstig, die Zuverlässigkeit der Kommunikation zwischen der Steuerungseinheit als Master und den Aktor- oder Sensoreinheiten als Slaves in einer projektierten Anlage erhöhen und damit die Anlagenverfügbarkeit deutlich erhöhen.

Die Erfindung wird nun anhand von Ausführungsbeispielen näher erläutert. Es zeigen:
- FIG 1: Blockschaltbild des AS-I-Systems,
- FIG 2: zeitlicher Ablauf eines Zyklus für die Kommunikation des Masters mit den Slaves entsprechend der AS-Interface Spezifikation,
- FIG 3-6: vier mögliche Szenarien einer Kommunikation entsprechend der vorliegenden Erfindung.

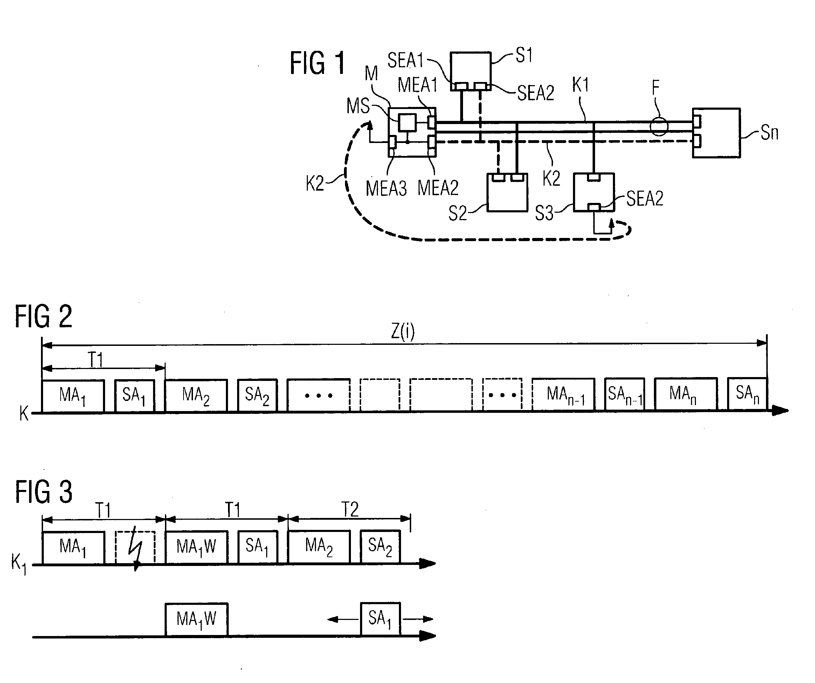

In einem als Master-Slave-System projektierten Feldbussystem werden eine Anzahl von Sensoren und Aktoren einer industriellen Anlage als Slaves S1, S2, ..., Sn mit einer Steuerungseinheit als Master M über ein Bussystem F miteinander verbunden. Ein solches, entsprechend den AS-Interface Spezifikationen festgelegtes System bezeichnet man auch als Single-Master System. Der Master M kommuniziert in wiederkehrenden Zyklen nacheinander mit allen projektierten und damit ihm zugeordneten Slaves S1, S2, ..., Sn um so Ein- und Ausgangsdaten mit diesen auszutauschen. Mit der derzeit festgelegten Spezifikation Version 2.11 des AS-Interface ist es somit möglich, dass der Master M mit bis zu n=62 Teilnehmern (Slaves) in Telegrammen mit 4 Bit Nutzdaten kommuniziert. Der prinzipielle Aufbau eines solchen Master-Slave Systems ist in FIG 1 dargestellt. Der Feldbus F ist als zweiadrige Leitung ausgebildet die gleichzeitig für die Kommunikation und die Spannungsversorgung der Kommunikationselektronik und Slaves mit niedrigem Strombedarf dient.

Solche projektierten Anlagen befinden sich häufig in industriellen Umgebungen, die hohe Störpegel aufweisen, die die Kommunikation zwischen Master und Slaves stören können. Erfindungsgemäß ist daher, wie in FIG 1 angedeutet, neben diesem Feldbus F als ersten Kommunikationskanal K1 ein zweiter Kommunikationskanal K2 zwischen Master M und den Slaves S1, S2, ..., Sn vorgesehen über den der Master M im Fehlerfall mit den Slaves kommunizieren kann. Dadurch wird die Wahrscheinlichkeit einer Kommunikationsunterbrechung zwischen Master und Slaves und damit den Ausfall einzelner Steuerungseinheiten und Aktoren bzw. Sensoren einer Anlage verringert und damit die Anlagenverfügbarkeit einer so projektierten Anlage deutlich erhöhen.

Erfindungsgemäß weist dazu der Master M neben der ersten Ein-/Ausgabeschnittstelle MEA1 für die Anbindung des Feldbusses F weitere Ein-/Ausgabeschnittstellen MEA2, MEA3 zur Anbindung wenigstens einer zweiten Kommunikationsverbindung K2 auf. Diese Kommunikationsverbindung kann dabei beispielsweise, wie in FIG 1 angedeutet, eine an die Ein-Ausgabeschnittstelle MEA2 angeschlossene drahtgebundene Verbindung parallel neben dem Feldbus F sein, oder eine and die Ein-/Ausgabeschnittstelle MEA3 über eine Antenne angeschlossene drahtlose Kommunikationsverbindung sein. Eine Steuervorrichtung MS im Master M versendet dann ein zu wiederholendes Telegramm über die erste (MEA1) und die weitere (MEA2 oder MEA3) Ein-/Ausgabeschnittstelle und damit über beide Kommunikationskanäle K1 und K2, wenn zuvor die Kommunikation dieses Telegramms zwischen Master M und dem dazugehörigen Slave über den erste Kommunikationskanal K1 fehlgeschlagen ist. Die Kommunikation des Master mit den Slaves über diesen zweiten Kommunikationskanal K2 erfolgt dann über diese weiteren Ein-/Ausgabeschnittstellen MEA2 und MEA3 des Masters und den entsprechenden weiteren Ein-Ausgabeschnittstellen SEA2 der Slaves S1, S2,..., Sn.

FIG 2 zeigt die Kommunikation zwischen einem Master M und Slaves S1, S2, ..., Sn, so wie sie derzeit in den AS-Interface Spezifikationen festgelegt ist. Innerhalb eines Zyklus Z spricht der Master M dabei nacheinander, das heißt mit einem seriellen Übertragungsprotokoll, die einzelnen Slaves S1, S2, ..., Sn in Telegrammen T1, T2, ..., Tn mit fest definierter Zeitdauer an. Die Anlage wird so projektiert, dass jedes der Telegramme T1, T2, ..., Tn eine Adresse enthält, die eindeutig einem der Slaves S1, S2, ..., Sn zugeordnet ist. Innerhalb einer Zeitdauer eines Telegramms kommuniziert der Master dann genau mit dem durch die Adresse festgelegten Slave, während die übrigen Slaves dieses Telegramm ignorieren. Wurden innerhalb eines Zyklus Z(i) so alle n mögliche Slaves (n= max. 62 Slaves für AS-Interface Spezifikation Version. 2.11, bzw. n= max. 31 Slaves für Vers. 2.0) S1, S2, ..., Sn mit den entsprechenden Telegrammen T1, T2, ..., Tn nacheinander angesprochen, wird diese Prozedur im nächsten Zyklus Z(i+1) wiederholt. Dazu werden, basierend auf einer nach den AS-Interface Spezifikationen festgelegten Managementphase zwischen den zwei Zyklen, die einzelnen Slaves wiederum nacheinander durch den Master angesprochen.

Ein Telegramm T1, T2, ..., Tn besteht dabei aus einem sogenannten Masteraufruf MA und einer Slaveantwort SA und hat nach der derzeitigen AS-Interface Spezifikation eine Länge von typischerweise geringfügig mehr als 150µs. Mit dem Masteraufruf MA kann der Master während einer Dauer von 84µs maximal 14 Bit an den, jeweiligen durch die Adresse des Telegramms festgelegten, Slave senden. Auf diesen Masteraufruf MA muss der Slave dann innerhalb dieser 150µs, die mit dem Start des Masteraufrufs MA beginnen, eine Slaveantwort SA an den Master zurück geschickt haben. Mit dieser Slaveantwort SA hat der. Slave dann die Möglichkeit innerhalb von 42µs maximal 7 Bit an Informationen an den Master zurückzuschicken. Die neben diesem Masteraufruf MA und Slaveantwort SA in einem Telegramm mit einer Zeitdauer von 150µs verbleibende Zeit von ca. 28µs wird als Pausenzeit für den Master und Slave benötigt. Diese Pausenzeiten werden benötigt, damit der Master bzw. der Slave den nächsten Masteraufruf bzw. die nächste Slaveantwort vorbereiten bzw. empfangene Masteraufrufe bzw. Slaveantworten aufbereiten kann. Zudem werden durch diese Pausenzeiten Signallaufzeiten und Verzögerungszeiten des Feldbusses und möglicher im Feldbus angeordneter Repeater ausgeglichen.

Wie in FIG 2 dargestellt, wird der Master M so innerhalb eines Zyklus Z beginnend mit einem Telegramm T1 der Zeitdauer von 150µs zuerst einen ersten Masteraufruf MA1 an den ersten Slave S1 schicken und dann auf eine Slaveantwort SA1 von diesem warten. Danach wird er im nächsten Telegramm T2 einen Masteraufruf MA2 an den zweiten Slave S2 geschickt und innerhalb der Zeitdauer des Telegramms T2 auf eine Slaveantwort SA2 von diesem warten. So werden nacheinander, das heißt seriell, die einzelnen Slaves S1, S2, ..., Sn vom Master M mit einer Masteranfrage MA1, MA2, ..., Man abgefragt und von diesen entsprechende Rückmeldungen als Slaveantwort SA1, SA2, ..., SAn erwartet.

Treten nun bei der Übertragung innerhalb einzelner Telegramme zu viele Fehler auf, kann es zur Anlagenstörung kommen. Wie diese vermieden werden können, soll nachfolgend beispielhaft an den vier in FIG 3 bis FIG 6 dargestellten Szenarien beschrieben werden.

FIG 3 zeigt den zeitlichen Verlauf auf den beiden Kommunikationskanälen K1 und K2, bei dem die Kommunikation mit dem ersten Slave S1 gestört ist. Hier empfängt der Master M im ersten Telegramm T1 auf dem ersten Kommunikationskanal K1 auf seinen gesendeten Masteraufruf MA1 keine Slaveantwort SA1 vom Slave S1. Dies könnte zum einen daran liegen, dass die Kommunikation zwischen beiden so gestört ist, dass der Slave bereits den Masteraufruf MA1 nicht erhalten hat oder auch das der Master keine Slaveantwort SA1 erhält. In beiden Fällen, wird der Master aber von einer Kommunikationsstörung ausgehen und somit im nächsten Telegramm T1 den Masteraufruf MA1W an denselben Slave S1 nochmals wiederholen. Erfindungsgemäß wird der Master M diesen wiederholten Masteraufruf MA1W dann nochmals über den ersten Kommunikationskanal K1 und zusätzlich über den zweiten Kommunikationskanal K2 versenden. Ist entsprechend der derzeit gültigen AS-Interface Spezifikation nur eine einmalige Wiederholung eines fehlerhaften Telegramms in einem Zyklus Z vorgesehen, wird der Master entweder auf dem ersten Kommunikationskanal K1 eine Slaveantwort SA1 innerhalb der Zeitdauer des Telegramms T erwarten oder auf dem zweiten Kommunikationskanal K2 innerhalb einer Zeitdauer die größer sein kann als die Zeitdauer auf dem ersten Kommunikationskanal K1. So könnte die Slaveantwort SA1 auf dem zweiten Kommunikationskanal K2 unmittelbar nach dem wiederholten Masteraufruf MA1W oder auch zu einem viel späteren Zeitpunkt aber innerhalb des Zyklus Z beim Master eingehen. Dies ist in FIG 3 durch die Pfeile um SA1 angedeutet. Die beste Performance lässt sich aber erreichen, wenn die Slaveantwort SA1 auf dem zweiten Kommunikationskanal K2 innerhalb einer Zeitdauer eingeht, die doppelt so groß ist wie die Zeitdauer der Telegramme auf dem ersten Kommunikationskanal K1.

Bei den in FIG 3 dargestellt Telegrammen T ist die Zeitdauer einer Slaveantwort SA1 über den zweiten Kommunikationskanal K2 gleich groß wie die einer Slaveantwort SA1 über den ersten Kommunikationskanal K1. Das bedeutet zwar, dass der Slave auf beiden Kommunikationskanälen K1 und K2 mit der gleichen Bruttodatenrate eine Slaveantwort SA1 senden muss. Gleichzeitig werden damit aber die Pausenzeiten zwischen wiederholtem Masteraufruf MA1W und Slaveantwort SA1 auf dem zweiten Kommunikationskanal K2 erhöht. Somit können an den zweiten Kommunikationskanal K2 geringere Anforderungen an das Timing und damit an die Übertragungsqualität gestellt werden als an den ersten Kommunikationskanal K1. Andererseits könnte aber auch, wie in FIG 4 strichliert angedeutet, die Zeitdauer für die Slaveantwort SA1 selbst auf dem zweiten Kommunikationskanal K2 wesentlich verlängert werden. Dadurch werden geringere Anforderungen an die zu übertragende Datenrate und damit wieder an die Übertragungsqualität dieses zweiten Kommunikationskanals K2 gestellt. Zudem könnte, nicht dargestellt, auch die eigentliche Zeitdauer für den wiederholten Masteraufruf MA1W auf K2 größer sein als auf K1, was wiederum die Datenrate auf dem zweiten Kommunikationskanal K2 senkt. Beide Ausführungsbeispiele oder jede Mischform davon erlauben somit, dass der zweite Kommunikationskanal K2 aufgrund der niedrigeren Anforderungen an die Übertragungsqualität kostengünstiger ausgebildet sein kann, als der erste Kommunikationskanal K1.

In FIG 4 und 5 ist eine Kommunikation über den ersten (K1) und zweiten (K2) Kommunikationskanal gezeigt, bei dem nicht nur die Slaveantwort SA1 auf den ersten Masteraufruf MA1 sondern auch auf dessen wiederholten Masteraufruf MA1W ausgeblieben ist. Ist festgelegt, dass die Zeitdauer des Telegramms T auf dem zweiten Kommunikationskanal K2 doppelt so groß ist wie auf dem ersten Kommunikationskanal K1, wird der Master auf dem zweiten Kommunikationskanal K2 nur für die Dauer 2T eine Slaveantwort SA1 erwarten. Ist eine Slaveantwort SA1, wie in FIG 4 angedeutet, spätestens mit Ende der erwarteten Slaveantwort SA2 auf dem ersten Kommunikationskanal K1 auf dem zweiten Kommunikationskanal K2 eingegangen, wird der Master keinen Fehler detektieren und ohne weiteres mit seiner Kommunikation fortfahren. Hat er aber, wie in FIG 5 angedeutet, im ersten Zyklus Z(i) über den zweiten Kommunikationskanal K2 auch dann noch keine Slaveantwort SA1 auf den wiederholten Masteraufruf MA1 erhalten, wird er zwar in seiner Kommunikation fortfahren, diesen Fehler aber auch als fehlgeschlagene Kommunikation mit dem Slave S1 speichern. Im nächsten Zyklus Z(i+1) wird der Master dann sofort über den ersten (K1) und zweiten (K2) Kommunikationskanal diesen Slave S1 nochmals versuchen mit einem Masteraufruf MA1 anzusprechen und eine Slaveantwort SA1 zu erhalten.

In FIG 6 ist ein stark gestörter erster Kommunikationskanal K1 gezeigt, bei dem der Master von keinem der angesprochenen Slaves eine Salveantwort erhält. Mit der Bedingung, dass die Telegrammzeitdauer auf dem zweiten Kommunikationskanal K2 doppelt so lange ist wie auf dem ersten Kommunikationskanal K1, ergibt sich für diese Situation die bestmögliche Performance. Das heißt, der Master hat jeweils innerhalb der gestrichelt dargestellten Bereichen, die Möglichkeit eine Slaveantwort SA1, SA2, ... SA(n-1) auf die wiederholten Masteraufrufe MA1, MA2, ... Ma(n-1) über den zweiten Kommunikationskanal K1 zu erhalten und damit die Störfestigkeit der Kommunikation zwischen Master und den dazu projektierten Slaves zu verbessern.

Auch wenn die Erfindung zuvor beispielhaft für ein Master-Slave-System entsprechend dem heutigen Stand Vers. 2.11 der AS-Interface Spezifikationen beschrieben wurde, soll sie nicht auf diese begrenzt sein. Der erfindungsgemäße Gedanken, neben dem bekannten AS-Interface Feldbus als ersten Kommunikationskanal einen zweiten Kommunikationskanal mit niedrigerer Übertragungsqualität für den Fall einer fehlerhaften Kommunikation auf dem ersten Kommunikationskanal bereitzustellen, ist auf jede weitere AS-Interface Spezifikation oder dieser ähnlichen Spezifikationen anwendbar. Wesentlich ist, dass mit dem erfindungsgemäßen Kommunikationsverfahren und den entsprechenden Vorrichtungen mit möglichst wenig Aufwand die Störsicherheit des Master-Slave-Systems und damit der projektierten Anlage erhöht wird, ohne dass die durch die AS-Interface Spezifikationen festgelegte Kommunikation über den ersten Kanal beeinflusst wird.

## Patentansprüche

1. Kommunikationsverfahren für einen nach dem AS-Interface Standard ausgeführten Feldbus (F) als ein erster Kommunikationskanal (K1), über den ein am Feldbus angebundener Master (M) in einem Zyklus (Z(i),Z(i+1)) seriell mit einer Anzahl am Feldbus (F) angebundener Slaves (S1, S2,..., Sn) kommuniziert, wobei in einem Zyklus (Z(i),Z(i+1)) die Kommunikation des Masters mit den Slaves nacheinander über Telegramme (T1, T2, ...,Tn), die jeweils eindeutig einem der Slaves (S1, S2, ..., Sn) zugeordnet sind, erfolgt
**dadurch gekennzeichnet, dass** eines der Telegramme (T1, T2, ..., Tn) auf dem ersten Kommunikationskanal (K1) und auf einem zweiten Kommunikationskanal (K2) zwischen Master (M) und Slave (S) wiederholt wird, wenn die Kommunikation dieses Telegramms (T1, T2, ...,Tn) über den ersten Kommunikationskanal (K1) fehlgeschlagen ist.

2. Kommunikationsverfahren nach Anspruch 1
**dadurch gekennzeichnet, dass** eine festgelegte Zeitdauer der Telegramme (T1, T2,..., Tn) für die Kommunikation des Masters (M) mit den Slaves (S1, S2, ...Sn) auf dem zweiten Kommunikationskanal (K2) größer als auf dem ersten Kommunikationskanal (K1) ist.

3. Kommunikationsverfahren nach Anspruch 2
**dadurch gekennzeichnet, dass** die Zeitdauer der Telegramme (T1, T2,..., Tn) auf dem zweiten Kommunikationskanal (K2) doppelt so groß wie die Zeitdauer auf dem ersten Kommunikationskanal (K1) ist.

4. Kommunikationsverfahren nach einem der Ansprüche 1 - 3
**dadurch gekennzeichnet, dass** ein Telegramm (T1, T2,..., Tn) einen Masteraufruf (MA), bei dem Daten vom Master (M) zu dem jeweiligen Slave (S1, S2, ...,Sn) übertragen werden, und eine Slaveantwort (SA), bei dem Daten des aufgerufenen Slaves (S1, S2,..., Sn) auf den Master (M) übertragen werden, umfasst.

5. Kommunikationsverfahren nach Anspruch 4
**dadurch gekennzeichnet, dass** bei der Wiederholung eines der Telegramme (T1, T2,..., Tn) der Masteraufruf (MA1W,MA2W,MA3W) parallel über den ersten (K1) und zweiten (K2) Kommunikationskanal gestartet wird.

6. Kommunikationsverfahren nach einem der vorherigen Ansprüche 1 bis 5
**dadurch gekennzeichnet, dass** im Falle dass auch die Wiederholung eines der Telegramme (T1, T2,..., Tn) fehlschlägt, eine weitere Wiederholung dieses Telegramms (T1, T2,..., Tn) im nächsten Zyklus (Z) sofort über den ersten (K1) und zweiten (K2) Kommunikationskanal erfolgt.

7. Master-Slave-System für einen nach dem AS-Interface Standard ausgeführten Feldbus (F), der einen Master (M) mit einer Anzahl von Slaves (S1,S2,...,Sn) verbindet, und der für den Master (M) und die Slaves (S1,S2,...,Sn) einen ersten Kommunikationskanal (K1) bildet, über den der Master in einem Zyklus (Z) seriell mit den Slaves (s1,S2,...,Sn) kommuniziert, wobei in einem Zyklus (Z) der Master mit den Slaves (S1,S2, ...,Sn) nacheinander über Telegramme (T1,T2,...,Tn) kommuniziert, die jeweils eindeutig einem der Slaves (S1,S2,...,Sn) zugeordnet sind,
**dadurch gekennzeichnet, dass** ein zweiter Kommunikationskanal (K2) zwischen Master (M) und Slaves (S) vorgesehen ist, über den zusätzlich zum ersten Kommunikationskanal (K1) eines der Telegramme (T1,T2,...,Tn) wiederholt wird, wenn die Kommunikation dieses Telegramms (T1, T2,..., Tn) über den ersten Kommunikationskanal (K1) fehlgeschlagen ist.

8. Master-Slave-System nach Anspruch 7
**dadurch gekennzeichnet, dass** der zweite Kommunikationskanal (K2) eine niedrigere Übertragungsqualität aufweist als der erste Kommunikationskanal (K1).

9. Master-Slave-System nach Anspruch 7 oder 8
**dadurch gekennzeichnet, dass** der Feldbus (F) als erster Kommunikationskanal (K1) eine drahtgebundene Kommunikationsverbindung und der zweite Kommunikationskanal (K2) eine drahtlose Kommunikationsverbindung zwischen Master (M) und Slaves (S1,S2,...,Sn) ist.

10. Steuerungseinheit als Master (M) für ein Master-Slave-System nach einem der Ansprüche 7 bis 9, mit einer ersten Ein-/Ausgabeschnittstelle (MEA1) zur Anbindung des Feldbus (F) als ersten Kommunikationskanal (K1) und eine weitere Ein-/Ausgabeschnittstelle (MEA2,MEA3) zur Anbindung einer weiteren Übertragungsverbindung als zweiten Kommunikationskanal (K2) und einer Steuervorrichtung (MS) die eines der Telegramme (T1, T2,..., Tn) wiederholt über die erste (MEA1) und die weitere (MEA2) Ein-/Ausgabeschnittstelle versendet, wenn zuvor die Kommunikation dieses Telegramms (T1, T2,..., Tn) zwischen Master (M) und dem dazugehörigen Slave (S1,S2,...,Sn) über den ersten Kommunikationskanal (K1) fehlgeschlagen ist.

11. Steuerungseinheit nach Anspruch 10
**dadurch gekennzeichnet, dass** die zweite Ein-/Ausgabeschnittstelle (MEA2) und die weitere Übertragungsverbindung für eine drahtlose Kommunikation ausgebildet sind.

12. Aktor- oder Sensoreinheit als Slave (S1,S2,...,Sn) für ein Master-Slave System nach einem der Ansprüche 7 bis 9 mit einer ersten Ein-/Ausgabeschnittstelle (SEA1) zur Anbindung des Feldbus (F) als ersten Kommunikationskanal (K1) und einer weiteren Ein-/Ausgabeschnittstelle (SEA2) zur Anbindung einer weiteren Kommunikationsverbindung als zweiten Kommunikationskanal (K2), wobei die weitere Ein-/Ausgabeschnittstelle (SEA2) und die weitere Kommunikationsverbindung für eine drahtlose Kommunikation ausgebildet sind.

13. Master-Slave-System mit einer Steuerungseinheit als Master (M), der unter Verwendung des Kommunikationsverfahren nach einem der Ansprüche 1-6 mit einer Anzahl ihm zugeordneter Slaves (S1,S2,...,Sn) kommuniziert.

## Claims

1. Communication method for a field bus (F) configured according to the AS-interface standard as a first communication channel (K1) via which a master (M) connected to the field bus serially communicates with a number of slaves (S1,S2,...,Sn) connected to the field bus (F) in a cycle (Z(i),Z(i+1)), the master communicating with the slaves in succession in a cycle (Z(i),Z(i+1)) using messages (T1, T2,..., Tn) which are each uniquely assigned to one of the slaves (S1,S2,...,Sn),
**characterized in that**
one of the messages (T1, T2,..., Tn) is repeated in the first communication channel (K1) and in a second communication channel (K2) between the master (M) and the slave (S) if the communication of this message (T1, T2,..., Tn) via the first communication channel (K1) has failed.

2. Communication method according to Claim 1,
**characterized in that**
a defined duration of the messages (T1, T2,..., Tn) for the communication between the master (M) and the slaves (S1,S2,...,Sn) in the second communication channel (K2) is longer than in the first communication channel (K1).

3. Communication method according to Claim 2,
**characterized in that**
the duration of the messages (T1, T2,..., Tn) in the second communication channel (K2) is twice as long as the duration in the first communication channel (K1).

4. Communication method according to one of Claims 1-3,
**characterized in that**
a message (T1, T2,..., Tn) comprises a master call (MA), in which data are transmitted from the master (M) to the respective slave (S1,S2,...,Sn), and a slave response (SA) in which data from the called slave (S1,S2,...,Sn) are transmitted to the master (M).

5. Communication method according to Claim 4,
**characterized in that**,
when repeating one of the messages (T1,T2,...,Tn), the master call (MA1W,MA2W,MA3W) is started in a parallel manner via the first communication channel (K1) and the second communication channel (K2).

6. Communication method according to one of the preceding Claims 1 to 5,
**characterized in that**,
if the repetition of one of the messages (T1, T2,..., Tn) also fails, this message (T1, T2,..., Tn) is immediately repeated again in the next cycle (Z) via the first communication channel (K1) and the second communication channel (K2).

7. Master-slave system for a field bus (F) which is configured according to the AS-interface standard, connects a master (M) to a number of slaves (S1,S2,...,Sn) and forms, for the master (M) and the slaves (S1,S2,...,Sn), a first communication channel (K1) via which the master serially communicates with the slaves (S1,S2,...,Sn) in a cycle (Z), the master communicating with the slaves (S1,S2,...,Sn) in succession in a cycle (Z) using messages (T1, T2,..., Tn) which are each uniquely assigned to one of the slaves (S1,S2,...,Sn),
**characterized in that**
a second communication channel (K2) is provided between the master (M) and the slaves (S), one of the messages (T1, T2,..., Tn) being repeated via the second communication channel, in addition to the first communication channel (K1), if the communication of this message (T1, T2,..., Tn) via the first communication channel (K1) has failed.

8. Master-slave system according to Claim 7,
**characterized in that**
the second communication channel (K2) has a lower transmission quality than the first communication channel (K1).

9. Master-slave system according to Claim 7 or 8,
**characterized in that**
the field bus (F) as a first communication channel (K1) is a wired communication link and the second communication channel (K2) is a wireless communication link between the master (M) and the slaves (S1,S2,...,Sn).

10. Control unit as a master (M) for a master-slave system according to one of Claims 7 to 9, having a first input/output interface (MEA1) for connecting the field bus (F) as a first communication channel (K1) and a further input/output interface (MEA2,MEA3) for connecting a further transmission link as a second communication channel (K2) and a control apparatus (MS) which repeatedly transmits one of the messages (T1, T2,..., Tn) via the first input/output interface (MEA1) and the further input/output interface (MEA2) if the communication of this message (T1, T2,..., Tn) between the master (M) and the associated slave (S1,S2,...,Sn) via the first communication channel (K1) has previously failed.

11. Control unit according to Claim 10,
**characterized in that**
the second input/output interface (MEA2) and the further transmission link are designed for wireless communication.

12. Actuator or sensor unit as a slave (S1,S2,...,Sn) for a master-slave system according to one of Claims 7 to 9, having a first input/output interface (SEA1) for connecting the field bus (F) as a first communication channel (K1) and a further input/output interface (SEA2) for connecting a further communication link as a second communication channel (K2), the further input/output interface (SEA2) and the further communication link being designed for wireless communication.

13. Master-slave system having a control unit as a master (M) which communicates with a number of slaves (S1,S2,...,Sn) assigned to it using the communication method according to one of Claims 1-6.

## Revendications

1. Procédé de communication pour un bus (F) de champ réalisé suivant la norme d'interface actionneur-capteur comme premier canal (K1) de communication, par lequel un maître (M) relié au bus de champ communique suivant un cycle (Z(i), Z(i+1)) en série avec un certain nombre d'esclaves (S1, S2, ..., Sn) rattachés au bus (F) de champ, dans lequel, dans un cycle (Z(i), Z(i+1)), la communication du maître avec les esclaves s'effectue l'une après l'autre par des télégrammes (T1, T2, ..., Tn), qui sont affectés respectivement d'une manière univoque à l'un des esclaves (S1, S2, ..., Sn), **caractérisé en ce que**
l'un des télégrammes (T1, T2, ..., Tn) est répété sur le premier canal (K1) de communication et sur un deuxième canal (K2) de communication entre le maître (M) et l'esclave (S), si la communication de ce télégramme (T1, T2, ..., Tn) par le premier canal (K1) de communication est ratée.

2. Procédé de communication suivant la revendication 1, **caractérisé en ce que**
un laps de temps fixé des télégrammes (T1, T2, ..., Tn) pour la communication du maître (M) avec les esclaves (S1, S2, ..., Sn) sur le deuxième canal (K2) de communication est plus grand que sur le premier canal (K1) de communication.

3. Procédé de communication suivant la revendication 2,
**caractérisé en ce que**
le laps de temps des télégrammes (T1, T2, ..., Tn) sur le deuxième canal (K2) de communication est deux fois plus grand que le laps de temps sur le premier canal (K1) de communication.

4. Procédé de communication suivant l'une des revendications 1 à 3,
**caractérisé en ce que**
un télégramme (T1, T2, ..., Tn) comprend un appel (MA) de maître, dans lequel des données sont transmises du maître (M) à l'esclave (S1, S2, ..., Sn) respectif, et une réponse (SA) d'esclave, dans lequel des données de l'esclave (S1, S2, ..., Sn) appelé sont transmises au maître (M).

5. Procédé de communication suivant la revendication 4,
**caractérisé en ce que**
lors de la répétition de l'un des télégrammes (T1, T2, ..., Tn), on fait commencer l'appel (MA1W, MA2W, MA3W) de maître en parallèle par le premier (K1) et par le deuxième (K2) canal de communication.

6. Procédé de communication suivant l'une des revendications précédentes 1 à 5,
**caractérisé en ce que**
dans le cas où la répétition de l'un des télégrammes (T1, T2, ..., Tn) est ratée aussi, une autre répétition de ce télégramme (T1, T2, ..., Tn) est effectuée dans le cycle (Z) suivant immédiatement par le premier (K1) et par le deuxième (K2) canal de communication.

7. Système maître-esclave pour un bus (F) de champ réalisé suivant la norme d'interface actionneur-capteur, qui relie un maître (M) à un certain nombre d'esclaves (S1, S2, ..., Sn) et qui forme, pour le maître (M) et les esclaves (S1, S2, ..., Sn), un premier canal (K1) de communication, par lequel le maître communique dans un cycle (Z) en série avec les esclaves (S1, S2, ..., Sn), dans lequel, dans un cycle (Z), le maître communique avec les esclaves (S1, S2, ..., Sn) l'un après l'autre par des télégrammes (T1, T2, ..., Tn), qui sont affectés respectivement d'une manière univoque à l'un des esclaves (S1, S2, ..., Sn),
**caractérisé en ce que**
il est prévu un deuxième canal (K2) de communication entre le maître (M) et les esclaves (S), par lequel, supplémentairement au premier canal (K1) de communication, l'un des télégrammes (T1, T2, ..., Tn) est répété, si la communication de ce télégramme (T1, T2, ..., Tn) par le premier canal (K1) de communication est raté.

8. Système maître-esclave suivant la revendication 7,
**caractérisé en ce que**
le deuxième canal (K2) de communication a une qualité de transmission moindre que le premier canal (K1) de communication.

9. Système maître-esclave suivant la revendication 7 ou 8,
**caractérisé en ce que**
le bus (F) de champ est, comme premier canal (K1) de communication, une liaison de communication par fil et, le deuxième canal (K2) de communication, une liaison de communication sans fil entre le maître (M) et les esclaves (S1, S2, ..., Sn).

10. Unité de commande comme maître (M) pour un système maître-esclave suivant l'une des revendications 7 à 9, comprenant une première interface (MEA1) d'entrée/sortie pour la liaison du bus (F) de champ comme premier canal (K1) de communication et une autre interface (MEA2, MEA3) d'entrée/sortie pour le rattachement du bus (F) de champ comme premier canal (K1) de communication et une autre interface (MEA2, MEA3) d'entrée/sortie pour le rattachement d'une autre liaison de transmission comme deuxième canal (K2) de communication et un dispositif (MS) de commande, qui envoie l'un des télégrammes (T1, T2, ..., Tn) de manière répétée par la première (MEA1) et par l'autre (MEA2) interfaces d'entrée/sortie, si auparavant la communication de ce télégramme (T1, T2, ..., Tn) entre le maître (M) et l'esclave (S1, S2, ..., Sn) associé par le premier canal (K1) est ratée.

11. Unité de commande suivant la revendication 10,
**caractérisée en ce que**
la deuxième interface (MEA2) d'entrée/sortie et l'autre liaison de transmission sont constituées pour une communication sans fil.

12. Unité d'actionneur ou de capteur comme esclave (S1, S2, ..., Sn) pour un système maître-esclave suivant l'une des revendications 7 à 9, comprenant une première interface (SEA1) d'entrée/sortie pour le rattachement du bus (F) de champ comme premier canal (K1) de communication et une autre interface (SEA2) d'entrée/sortie pour le rattachement d'une autre liaison de communication comme deuxième canal (K2) de communication, l'autre interface (SEA2) d'entrée/sortie et l'autre liaison de communication étant constituées pour une communication sans fil.

13. Système maître/esclave ayant une unité de commande comme maître (M), qui communique en utilisant le procédé de communication suivant l'une des revendications 1 à 6 avec un certain nombre d'esclaves (S1, S2, ..., Sn), qui lui sont affectés.
